# EUROPÄISCHE PATENTSCHRIFT

(11) **EP 1 101 674 B1**
(45) Veröffentlichungstag und Bekanntmachung des Hinweises auf die Patenterteilung: **23.04.2008**
(21) Anmeldenummer: 00119071.9
(22) Anmeldetag: 02.09.2000
(51) Int. Cl.: B60S 3/04

(54) **Mobile Waschbox**
Mobile washing apparatus
Dispositif de lavage mobile

(30) Priorität: 16.11.1999 DE 19954961
(43) Veröffentlichungstag der Anmeldung: 23.05.2001
(73) Patentinhaber: WAP Reinigungssysteme GmbH & Co., 89287 Bellenberg (DE)
(72) Erfinder: Pultz, Harald, 89171 Illerkirchberg (DE)
(74) Vertreter: Riebling, Peter

(56) Entgegenhaltungen:
- EP-A- 0 431 353
- DE-A- 2 741 552
- DE-A- 2 850 359
- DE-A- 4 226 712
- DE-A- 4 336 718
- DE-U- 8 807 070
- ES-A- 2 076 867
- GB-A- 2 217 376
- US-A- 3 258 019
- US-A- 5 033 489
- US-A- 5 833 294

## Beschreibung

Die Erfindung betrifft eine Waschbox zur Aufnahme mindestens eines Fahrzeuges, bevorzugt von Kraftfahrzeugen zu Reinigungszwecken nach dem Oberbegriff des Hauptanspruches 1.

Derartige gattungsgemäße Waschboxen bestehen aus einem Stahlgerüst aus Stahlträgern, welches Stahlgerüst auf einem Fundamentboden angebracht ist und auf dem Stahlgerüst selbst abdeckende Wände angebracht sind zur Bildung eines für die Aufnahme der Kraftfahrzeuge dienenden umbauten Raumes. Hierbei sind in Einfahrtsrichtung bzw. in Ausfahrtsrichtungen Öffnungen innerhalb der Stahlkonstruktion vorgesehen, welche zum Ein- bzw. Ausfahren der Kraftfahrzeuge dienen.

Die Waschbox besteht also im wesentlichen aus zwei zueinander beabstandeten Seitenwänden und einem darüber befindlichen Dach, wobei diese Teile bevorzugt etwa vertikal bzw. etwa horizontal vorgesehen sind und aus zwei sich gegenüber liegenden Öffnungen zum Zwecke des Ein- und Ausfahrens der Fahrzeuge.

Weiterhin besitzen derartige Waschboxen nach dem Stand der Technik innerhalb des Stahlgerüstes entsprechende Vorrichtungen zur Durchführung der Reinigung der Kraftfahrzeuge, nämlich entsprechende Programmautomaten zur Auswahl des Waschprogrammes, entsprechende Lanzenköche, in welchem die Hochdruckspritzlanzen aufgenommen werden können, Schaumbürstenwannen mit den entsprechenden Schaumbürsten, entsprechende Deckenkreisel zur Führung von Hochdruckleitungen für die Spritzlanzen und Schaumbürsten, sowie Leuchtkörper zur Ausleuchtung des Innenraumes der Waschbox.

Des weiteren befindet sich innerhalb der Waschbox oder außerhalb der Waschbox entsprechende Stahlschränke für die Aufnahme der Waschtechnik oder aber diese Waschtechnik ist innerhalb der Stahlkonstruktion eingebaut. Wenn diese Waschtechnik außerhalb der Waschbox angebracht ist, so befindet sich diese Waschtechnik innerhalb eines Technikcontainers. Derartige Waschtechniken beinhalten im wesentlichen Wasserspeicher, eine Wasseraufbereitung, Heizungen, Druckerzeugungseinheiten, etc. Und können für eine einzige Waschbox vorgesehen sein oder aber für mehrere dieser Waschboxen.

Bisher wurden derartige Waschboxen aus einem Stahlgerüst in Einzelteilen, bzw. in einzelnen Stahlträgern auf die Baustelle geliefert und dort Vorort in mehreren Arbeitstagen aufgestellt. Danach erfolgte erst der technische Einbau wie der Einbau der Hochdruckleitungen, der Lanzen, der Schaumbürsten, Deckenkreisel etc. und danach erst wurde die Funktionsüberprüfung der Anlage in Form einer Inbetriebnahmeprüfung durchgeführt und die Anlage entsprechend abgenommen.

Nachteil dieser Waschboxen aus einer Stahlkonstruktion nach dem Stand der Technik ist, daß durch die Vorortmontage der einzelnen Stahlträger zu einem Stahlgerüst, das Anbringen der Abdeckungen an das Stahlgerüst und das Einbringen der entsprechenden technischen Einbauten, sowie das Anschließen der Waschtechnik und die Inbetriebnahme ein erheblicher Montageaufwand von etwa 1-2 Wochen entsteht, was sehr kostenintensiv ist.

Auch ist die Funktionsüberprüfung sehr kostenintensiv, da diese vor Ort auf der Baustelle durchgeführt werden muss nach dem Zusammenbau der Waschbox, da sämtliche Geräte zur Überprüfung der richtigen Funktion der Waschbox mit auf die Baustelle gebracht werden müssen und dadurch ein erhöhter Transport, logistischer und auch messtechnischer Aufwand damit verbunden ist.

Ein weiterer Nachteil der Waschboxen nach dem Stand der Technik ist, dass der Aufbau derartiger Waschboxen vor Ort lediglich bei entsprechend günstigen Witterungsverhältnissen stattfinden kann, und somit die Waschboxen nicht beliebig je nach Bedarf aufgestellt werden können, da bei schwierigen Witterungsbedingungen wie beispielsweise Schnee, Regen und starkem Wind ein Aufstellen derartiger Waschboxen nach dem Stand der Technik nicht möglich ist.

Mit der GB 2 271 376 A wird ein Verfahren zum Aufbau einer Waschstation in Modulbauweise für Kraftfahrzeuge offenbar, welches eine Anzahl von Standardelementen zur Verfügung stellt und diese zur Bildung einer Station konfektioniert, worin eins dieser Elemente ein Technikraum zur Aufbewahrung von Steuermitteln ist und dieser Technikraum vormontiert und geprüft ist.
Diese Druckschrift weist den Nachteil auf, dass dieser Druckschrift das Merkmal einer transportablen Waschstation nicht zu entnehmen ist.

Mit dem Gegenstand der Druckschrift US 5,033,489 wird eine mobile Waschbox zur Aufnahme mindestens eines Fahrzeuges zu Reinigungszwecken offenbart, welche auf einem horizontalen Fundamentboden anbringbar ist, bestehend aus einem Stahlgerüst aus Stahlträgern, an welchen Wandungen angebracht sind, mir einer Öffnung zum Ein- und Ausfahren der Fahrzeuge, wobei zwei vorgefertigte Waschboxen auf einem normalen Lastkraftwagen transportierbar sind, und die Waschbox bereits in der Position während des Transportes mindestens je einen Programmautomaten, einen Lanzenköcher, eine Schaumbürstenwanne, alle Hochdruckleitungen, einen Leuchtkörper, eine Spritzeinrichtung und eine Schaumbürste aufweisen, welche bereits an Ihrem vorgesehenen Befestigungsort an dem Stahlgerüst befestigt sind.
Diese Druckschrift weist den Nachteil auf, dass die Waschbox nur eine Öffnung zum Ein- und Ausfahren der Fahrzeuge aufweist und somit das Reinigen von relativ langen Fahrzeugen erschwert wird. Darüber hinaus ist eine modulare Erweiterung von Waschboxen erfindungsgemäß nicht vorgesehen.

Mit dem Gegenstand der Druckschrift US 5,833,294 A wird eine mobile Kundendienst-Anlage auf einem Fahrzeug offenbart, welche beidseitig eine äußere Seitenwand zur Verlängerung des Deckenbereichs und beidseitig eine innere Seitenwand zur Bildung einer Ein- und Ausfahrrampe unterhalb des gebildeten Deckenbereichs schwenkbar angeordnet ist. Die Anlage ist links und rechts des Service-Bereichs mit Sozialräumen und Büro ausgestattet mit dem Transportfahrzeug fest verbunden und wird für Kundendienstleistungen an Personenkraftfahrzeugen eingesetzt.
Ein Nachteil dieser Anlage ist, das eine derartige Anlage nicht modular erweiterbar ist und der Einsatz dieser Anlage einen relativ großen Platzbedarf vorsieht. Des Weiteren ist in einer derartigen Anlage das Reinigen von Personenkraftfahrzeugen gemäß vorliegender Anmeldung nicht durchführbar.

Mit der DE 42 26 712 A1 wird eine Anlage zum Reinigen von Kraftfahrzeugen offenbart, welche zur manuellen Reinigung von Kraftfahrzeugen ausgebildet ist.
Säulen zum Tragen einer Überdachung sind als Hohlkörper ausgebildet, an welchen die angeschlossenen Handgeräte mittels Halterungen befestigt sind, wobei Kabel und Zuleitungen durch diese hindurch und in die Bodenplatte geführt werden. Zusätzlich ist ein Deckenrohrsystem zu den Aggregaten bzw. zu den Steuereinheiten und den Handgeräten befestigt.
Diese Druckschrift weist den Nachteil auf, dass diese Anlage eine rein stationäre Anlage ist, wobei der Aufbau der Anlage vor Ort aus einzelnen Komponenten durchgeführt wird und somit witterungsabhängig ist.

Daher ist es Aufgabe der vorliegenden Erfindung eine derartige Waschbox nach dem Stand der Technik derart weiterzubilden, dass diese Waschbox kostengünstiger montierbar ist und eine kompakte Konstruktion aufweist.

Zur Lösung dieser Aufgabe dient die technische Lehre nach dem Hauptanspruch 1.

Eines der wesentlichen Merkmale hierbei ist, daß die Waschbox nach oben hin eine abschließende Decke besitzt, welche an dem Stahlgerüst derart um mindestens eine Schwenkachse schwenkbar befestigt ist, daß diese Decke aus einer etwa vertikalen Transportposition in eine etwa horizontale Benutzungspositions bringbar ist.

Wesentlicher Vorteil dieser Maßnahmen des Anbringes einer schwenkbaren Decke an dem Stahlgerüst einer derartigen Waschbox ist, daß durch das Verschwenken dieser Decke in eine geeignete Transportposition die Außenmaße der Waschbox nach der Erfindung derart verringert werden, daß diese Waschbox sehr leicht auf einem geeigneten Lkw transportiert werden kann. Durch das Herabschwenken der Deckenkonstruktion an den Hauptträger der Stahlkonstruktion wird also das Außenmaß auf etwa ein viertel bis ein achtel des Außenmaßes in der Benutzungsposition gebracht und somit ist es möglich eine derartige erfindungsgemäße Waschbox auf einem Tieflader zu bringen und vom Ort der Montage bzw. der Herstellung zum Ort des Aufbaus und der Benutzung zu bringen.

Hierbei wird es vorgesehen, daß die technischen Einbauten innerhalb der Waschbox wie beispielsweise Programmautomaten, Lanzenköcher, Schaumbürstenwanne, Deckenkreisel, Hochdruckleitungen, Leuchtkörper, Spritzeinrichtungen und Schaumbürsten mindestens teilweise, bevorzugt jedoch vollständig innerhalb einer Produktion- bzw. Montagehalle an die Waschbox angebracht wird bzw. in die Waschbox eingebracht wird. Dies hat den Vorteil, daß diese gesamten Vorrichtungen zur Reinigung eines Kraftfahrzeuges bereits witterungsunabhängig beim Hersteller bzw. beim Montagedruck innerhalb einer geschlossenen Halle in die Mobile Waschbox mit eingebracht werden kann und bereits dort eine vollständige Funktionsprüfung sämtlicher für die Reinigung der Kraftfahrzeuge vorgesehenen Techniken durchgeführt werden können.

Vorgesehen ist hierbei, daß der wesentliche Träger dieser Waschbox etwa mittig innerhalb der Waschbox vorgesehen ist und dieser Rahmen etwa U-förmig oder aber rechteckförmig ausgebildet ist, welcher Rahmen dann an einem entsprechend vorbereiteten Fundamentboden angebracht werden kann. Hierbei können an den Rahmen an der Unterseite zusätzliche Stahlplatten angebracht sein, welche Bohrungen aufweisen, durch welche dann entsprechende Halteelemente wie beispielsweise Schrauben hindurch geführt werden und mittels welcher Schrauben dann diese Stahlplatten am Fundamentboden festgeschraubt werden.

Das Dach selbst kann aus mehreren Teilen bestehen wobei zwei Dachhälften vorgesehen sind, welche spiegelsymmetrisch an der Oberkante dieses zentralen Rahmens angebracht sind und um eine entsprechende Schwenkachse gegenläufig zueinander hoch und abschwenkbar gehaltert werden.

Um nun das Dach bzw. die Dachteile in der gewünschten Position zu halten, welche bevorzugt etwa horizontal zum Fundamentboden verlaufen soll, ist es vorgesehen, entsprechende Stützträger zu berücksichtigen, welche Stützträger entweder dem zentralen Rahmen und dem Dach eingebracht werden, oder aber zwischen dem Dach und dem Fundamentboden.

Bevorzugt wird hierbei, wenn mindestens eine Stützstrebe pro Deckenteil vorgesehen ist, es könnten jedoch auch mehrere Stützstreben vorgesehen sein, jedoch müßten diese dann in einer entsprechenden Höhe angebracht sein, damit die Ein- und Ausfahrt der Kraftfahrzeuge nicht beeinträchtigt wird. Das Dach selbst bzw. jedes einzelne Dachteil besteht im wesentlichen aus Quer- und Längsträgern, wobei die Längsträger etwa parallel zum zentralen Hauptrahmen verlaufen und die Querträger etwa rechtwinklig dazu, wobei bevorzugt zusätzlich zur Schwenkachse und zu dieser beabstandet ein Längsträger pro Dachteil vorgesehen ist und mindestens zwei zueinander beabstandete Querträger, auf welchen Querträgern und Längsträgern dann eine entsprechende Abdeckung vorgesehen ist, welches als eigentliches regen- und sonnenabweisendes Dach dann wirkt.

Bevorzugt wird hierbei, wenn das Dach derart am zentralen Hauptrahmen hochgeschwenkt wird, daß das Dach in Bezug auf den Fundamentboden eine leichte Neigung aufweist und diese Neigung in Richtung des zentralen Rahmens verläuft, so daß auftretendes Wasser wie beispielsweise Regen nach innen in Richtung zentralen Rahmen abläuft und dort entweder entsorgt werden kann oder aber für die Reinigung innerhalb der Waschbox selbst benutzt werden kann.

Die Stützstrebe zwischen den Dächern und den zentralen Rahmen kann nicht lösbar, teilweise lösbar oder aber vollständig lösbar vorgesehen sein, wobei es bevorzugt wird, daß die Stützstreben lösbar angebracht sind, so daß diese für den Transport vollständig herausgenommen werden und beispielsweise in einer Vertiefung oben am zentralen Rahmen für den Transport eingelegt werden können.

Dies ist jedoch nicht zwingend erforderlich, in einer anderen Ausführungsform ist es jedoch vorgesehen, daß die Stützstreben für den Transport an ihren eigentlichen Stützstellen an dem Dach und an dem Rahmen verbleiben, wobei dann mindestens eine der Stützstellen als Linearführung und/oder teleskopisch ausgebildet sein müssen. Hierbei können für die Linearführung Gleitführungen vorgesehen sein oder aber rollengelagerte Führungen und ebenso bei der teleskopischen Führung eine Gleitlagerung aber auch eine Rollenlagerung vorgesehen sein.

Zur Erleichterung des bevorzugt per Hand vorgesehenen Hochschwenkens der Dachteile kann ein zusätzlicher mechanischer Kurbelantrieb mit optionalen Getriebe an die Dachteile angekoppelt sein oder aber auch mehrere dieser mechanischen Kurbelantriebe vorgesehen sein, beispielsweise für jedes einzelne Dachsegment. Auch soll es möglich sein, einen entsprechenden elektrischen Antrieb mit Getriebe vorzusehen für jedes einzelne Dachsegment oder aber ein elektrischer Antrieb für sämtliche Dachteile, wobei diese Dachteile dann untereinander gekoppelt sein müssen.

Bei einem einzelnen Antrieb für die einzelnen Dachsegmente ist es dann also nötig eine mechanische Synchronisierung vorzusehen, wenn jedoch aber eine Mehrzahl von elektrischen Antrieben vorgesehen ist, so kann die Synchronisierung der Deckensegmente dadurch erreicht werden, daß die Antriebe elektrisch synchronisiert werden.

Wie bereits oben erwähnt kann die Dachneigung im Vergleich zum Fundament derart gestaltet sein, daß das Dach nicht parallel zum Fundament verläuft sondern leicht im Winkel dazu und dadurch Regenwasser etc. abgeleitet werden kann, was eventuell zum Betrieb der Anlage dienen kann. Ebenso kann es vorgesehen sein, daß auf diesem Dach Sonnenprojektoren und/oder Solarzellen angebracht sind, welche auf den Abdeckungen angebracht sein können oder aber welche selbst als Abdeckung dienen können. Der so gewonnene Solarstrom bzw. die so gewonnene Solarwärme in Form von warmen Wasser können dann ebenfalls zum Betrieb der Anlage dienen.

Zum Betrieb der gesamten mobilen Waschbox dient eine an sich bekannte Waschtechnik, beinhaltet mindestens einen Wasserspeicher, mindestens eine Wasseraufbereitung, mindestens eine Heizung, mindestens eine Druckerzeugungseinheit, welche Waschtechnik als Schrank innerhalb der Waschbox oder Als Technikcontainer außerhalb der Waschbox angeordnet sein kann.

Erfindungsgemäß soll zusätzlich noch vorgesehen sein, daß derartige mobile Waschboxen mechanisch aneinander koppelbar sind und/oder funktionell koppelbar sind und jeweils voneinander unabhängige Waschtechniken besitzen können oder aber auf eine oder mehrere Waschtechniken zugreifen können.

Beim Einsatz einer gemeinsamen Waschtechnik ist es möglich diese innerhalb einer Waschbox vorzusehen, zwischen zwei benachbarten und gekoppelten Waschboxen oder aber außerhalb aller Waschboxen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: zeigt eine erfindungsgemäße mobile Waschbox, an welche eine zweite derartige mobile Waschbox angekoppelt ist, in perspektivischer Darstellung;
- Figur 2:: zeigt eine Seitenansicht der mobilen Waschbox gemäß Figur 1 mit einem innerhalb der Waschbox befindlichen Kraftfahrzeug
- Figur 3:: zeigt eine Draufsicht einer erfindungsgemäßen Waschbox;
- Figur 4:: zeigt zwei der erfindungsgemäßen Waschboxen in der Transportposition mit eingeklappten Dachteilen, auf einem Tieflader befindlich

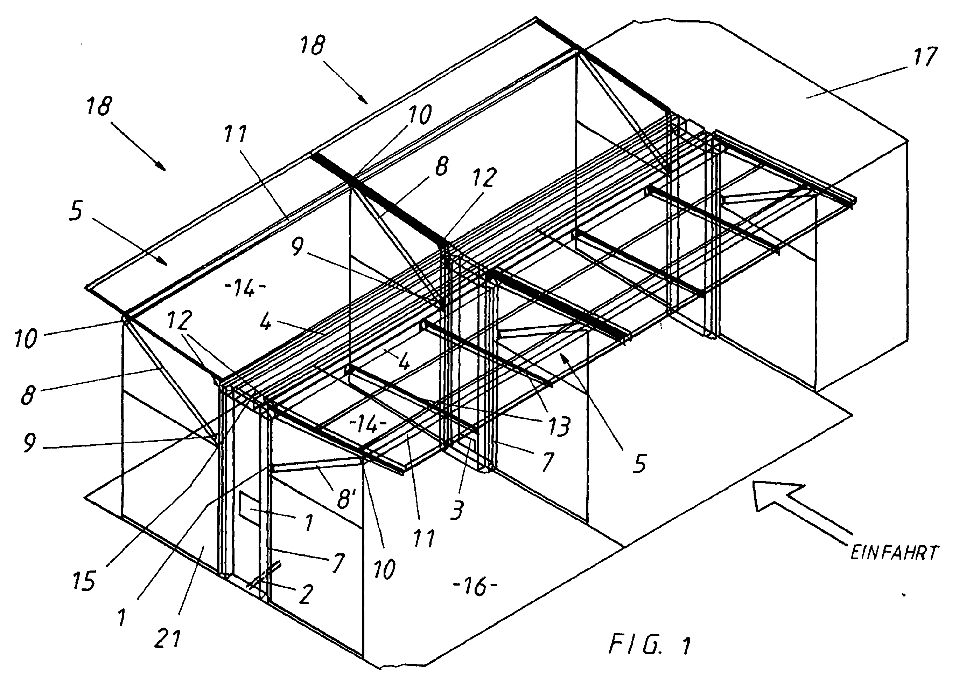

Figur 1 zeigt eine perspektivische Darstellung der erfindungsgemäßen, mobilen Waschbox im aufgebauten Benutzungszustand, wobei zwei derartige Waschboxen aneinander gekoppelt sind. Die Dächer 5 dieser Waschboxen 18 sind also im hochgeklappten Zustand und bereit, daß ein Fahrzeug in Einfahrtsrichtung einfährt in die Waschbox 18, dort gewaschen wird und wieder aus der Waschbox 18 hinausfährt.

Hierbei ist die Waschbox 18 auf einem Fundamentboden 16 angebracht, wobei die Waschbox im wesentlichen aus einer Stahlkonstruktion besteht mit einem mittigen zentralen Portalrahmen 7, welcher etwa U-förmig oder rechteckförmig ausgebildet ist, wobei an diesem Portalrahmen 7 an den Schwenkachsen 12 zwei Dachhälften 5a und 5b schwenkbar angebracht sind, welche spiegelsymmetrisch zueinander liegen und gegenläufig zueinander auf- und abgeschwenkt werden können.

Die Verbindung zwischen dem Portalrahmen 7 und dem Dach 5 wird über eine Stützstrebe 8 gebildet, welche Stützstrebe 8 zum einen über eine Stützstelle 10 an einer Längsstrebe 11 an der Unterseite des Daches 5 angebracht ist und zum anderen an einer weiteren Stützstelle 9 am Portalrahmen 7, an dessen vertikalem Seitenteil.

Hierbei ist es bevorzugt, wenn die Stützstrebe 8 leicht lösbar in den jeweiligen Stützstellen 9 und 10 am Dach bzw. am Portalrahmen angebracht ist. Dies hat den Vorteil, daß während des Transportes aus dem Herstellungswerk diese Stützstreben vom Dach 5 und Portalrahmen 7 losgelöst transportiert werden können und dann an Ort und Stelle erst nach verschwenken des Daches nach oben dann zur Stützung des Daches 5 eingesetzt werden. Wie bereits beschrieben, ist auch möglich diese Stützstrebe 8 über eine entsprechend geeignete Lagerung am Dach 5 bzw. am Portalrahmen 7 anzubringen, wobei dies ebenfalls lösbar oder aber nur einseitig lösbar oder aber beidseitig nicht lösbar vorgesehen sein kann.

Diese Stützstrebe 8 ist beidseitig an der Längsstrebe 11 des Daches 5 und an dessen Unterseite angebracht und führt am Rande des Daches quer zum Portalrahmen zu diesen Portalrahmen 7 hin, wobei die Stützstelle 10 am Dach 5 in vertikaler Richtung höher gelegen ist wie die Stützstelle 9 am Portalrahmen 7. Auch ist die Stützstelle 10 des Daches 5 höher gelegen wie die Schwenkachse 12, so daß das Dach in Richtung des Portalrahmens 7 abfällt, wodurch auftretendes Wasser trenerchiert werden kann.

Das Dach 5 selbst besteht aus einer Längsstrebe 11 im vorderen freien Endbereich und in diesem Fall aus vier Querstreben 13, welche senkrecht zum Portalrahmen 7 verlaufen und zur Aufnahme der Abdeckungen 14 dienen.

Innerhalb der Waschbox 18 ist im Bereich des Portalrahmens 7 ein Programmautomat 1 vorgesehen, welcher die Funktion der Programmwahl des jeweiligen Waschprogrammes übernimmt und welcher mit der außerhalb der hier dargestellten Waschboxen 18 befindlichen Waschtechnik 17 elektrisch verbunden ist. Im Bereich dieses Programmautomates 1 ist ein Lanzenköcher 2 vorgesehen, in welchem dann die jeweilige Hochdrucklanze aufgenommen werden kann. An der anderen Stützstrebe des Portalrahmens 7 ist dann eine Bürstenwanne 3 zur Aufnahme einer Reinigungsbürste vorgesehen.

Im Bereich des horizontalen Teiles des Portalrahmens 7 ist ein Beleuchtungskörper 4 vorgesehen, welcher unterhalb des Daches 5 angebracht ist und den gesamten unteren Raum geeignet ausleuchtet.

Seitlich an der Tragkonstruktion der Waschbox 18 angebracht sind Seitenwände 21 um die Waschbox 18 seitlich abzuschließen und um Schmutzeintrag in die Waschbox 18 zu hindern und den Austrag von Waschflüssigkeit aus der Waschbox zu verhindern, da diese ja geeignet kanalisiert werden soll zur weiteren Aufreinigung.

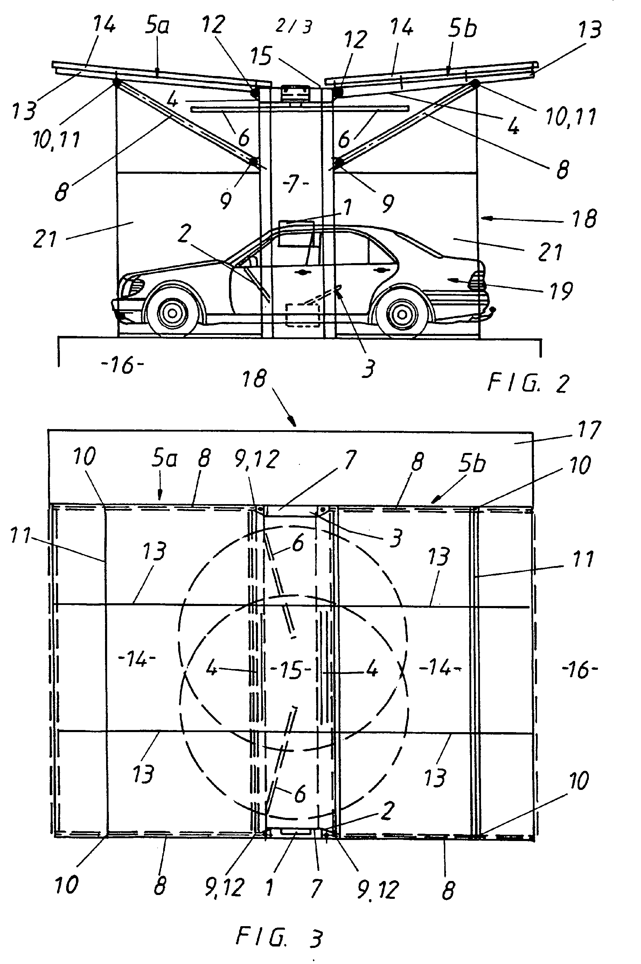

In Figur 2 ist eine Seitenansicht der erfindungsgemäßen Waschbox gemäß Figur 1 dargestellt, wobei hier ein Fahrzeug 19 sich im eingefahrenen Zustand befindet.

Deutlich zu sehen ist die Neigung der Dächer 5a und 5b in Richtung des zentralen Portalrahmens 7, so daß dort dann Regenwasser aufgefangen werden kann.

Unterhalb der Dachhälften 5a und 5b ist ein Deckenkreisel 6 angebracht, an welchem die Hochdruckschläuche geführt werden in Richtung der Sprühlanze oder der Schaumbürste, so daß dies Hochdruckschläuche sich nicht in sich selbst verdrehen, wenn der Bediener mehrfach um das Kraftfahrzeug 19 während der Reinigung bewegt.

Im übrigen sind mit den gleichen Bezugszeichen auch gleiche Bauteile in dieser Figur 2 wie in der Figur 1 bezeichnet.

In Figur 3 ist eine Draufsicht auf lediglich eine Waschbox 18 dargestellt, wobei hier die Waschtechnik 17 außerhalb der Waschbox angeordnet ist.

In dieser Figur 3 ist deutlich zu sehen, daß die Grundrißfläche des Portalrahmens7 deutlich geringer ist als die Grundrißfläche der gesamten Waschbox 18 mit den ausgeklappten Dachhälften 5a und 5b, so daß bei einklappen dieser Dachhälften 5a und 5b dann die entsprechende Grundrißfläche der Waschbox 18 bzw. die Breite der Waschbox 18 gemäß Figur 2 um einiges geringer ist, was für eine geeignete Transportierung dieser erfindungsgemäßen mobilen Waschbox effiziell nötig ist. Bevorzugt ist hierbei, wenn die Breite im eingeklappten Transportzustand etwa ein viertel der Breite im ausgeklappten Benutzungszustand ist.

Im übrigen sind mit den gleichen Bezugszeichen wiederum gleiche Bauteile in Figur 3 wie in Figur 2 und Figur 1 dargestellt.

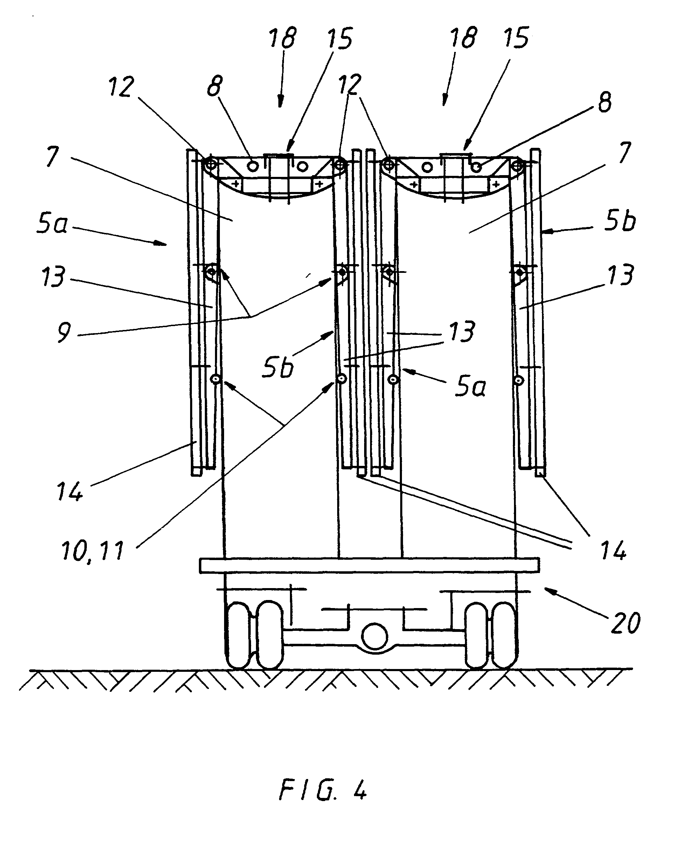

In Figur 4 ist nun dargestellt, wie zwei erfindungsgemäße mobile Waschboxen auf einem Lkw 20 transportiert werden können. Hierbei sind die beiden Deckenhälften 5a und 5b zweier Module von Waschboxen im heruntergeklappten Zustand und nehmen somit lediglich noch etwa ein viertel der in Betriebszustand vorgesehenen Breite ein und daher können zwei dieser Waschboxen auf einem herkömmlichen Lkw untergebracht werden. Hierbei ist vorgesehen, daß die Längsachse der Portalrahmen 7 auch in Längsachse des Lkws 20 sich befinden und die beiden Waschboxen nebeneinander also in Querrichtung des Lkws 20 aufgeladen sind.

Die Stützstreben 8 jeder Waschbox 18 sind von den Stützstellen 9 und 10 der Deckenteile 5a, 5b und des Portalrahmens 7 abgenommen und sind zu Transportzwecken in einer entsprechend geeigneten Vertiefung 15 im oberen, horizontalen Teil des Portalrahmens 7 eingelegt und dort geeignet befestigt. Dies hat den Vorteil, daß keine kostenaufwändige Führung der Stützstrebe innerhalb der Stützstellen 9 und 10 am Dach 5 oder am Rahmen 7 vorgesehen sein muß und dadurch Kosten eingespart werden können.

Soll nun eine derartige öffnungsgemäße mobile Waschbox öfters an verschiedenen, wechselnden Orten eingesetzt werden, so ist es bevorzugt, wenn die Stützstrebe 8 nicht abnehmbar von den Stützstellen 9 und 10, sondern dort in einer entsprechenden Gleitlagerung oder rollengeführten Lagerung angebracht sind.

Die Transportstellung ist also gemäß Figur 4 derart definiert, daß die beiden Dachhälften 5a und 5b der Waschbox 18 im wesentlichen aus Ihrer horizontalen Benutzungsposition in eine im wesentlichen vertikale Transportposition verschwenkt wurden sind und somit sich die Längsstreben 11, die Querstreben 13 und die Abdeckung 14 in der Nähe des Rahmens 7 bzw. in der Längsebene des Rahmens 7 befinden. Dort können die eingeklappten Dachhälften oder Dachteile 5 geeignet am Rahmen 7 befestigt sein oder aber diese Dachteile 5 werden über entsprechende Spanngurte am Portalrahmen 7 befestigt.

In Figur 4 bezeichnen wieder gleiche Bezugszeichen gleiche Bauteile wie in den übrigen vorhergehenden Figuren.

### Zeichnungslegende

- 1.: Programmautomat
- 2.: Lanzenköcher
- 3.: Bürstenwanne
- 4.: Beleuchtungskörper
- 5.: Dach 5a, 5b
- 6.: Deckenkreisel
- 7.: Portalrahmen
- 8.: Stützstrebe
- 9.: Stützstelle für 8 an 7
- 10.: Stützstelle für 8 an 5
- 11.: Längsstrebe
- 12.: Schwenkachse
- 13.: Querstrebe
- 14.: Abdeckung
- 15.: Vertiefung
- 16.: Fundamentboden
- 17.: Waschtechnik
- 18.: Waschbox
- 19.: PKW
- 20.: LKW
- 21.: Seitenwand

## Patentansprüche

1. Mobile Waschbox (18) zur Aufnahme mindestens eines Fahrzeugs (19) zu Reinigungszwecken, welche auf einem etwa horizontalen Fundamentboden (16) anbringbar ist, bestehend aus einem Stahlgerüst aus Stahlträgern (7- 13), an welchen Wandungen (14, 21) angebracht sind mit einer Öffnung zum Ein- und Ausfahren der Fahrzeuge, wobei zwei vorgefertigte Waschboxen (18) auf einen normalen Lastkraftwagen transportierbar sind, und die Waschbox bereits in der Position während des Transportes mindestens je einen Programmautomaten, einen Lanzenköcher, eine Schaumbürstenwanne, alle Hochdruckleitungen, einen Leuchtkörper, eine Spritzeinrichtung und eine Schaumbürste aufweisen, welche bereits an ihrem vorgesehenen Befestigungsort an dem Stahlgerüst befestigt sind, **dadurch gekennzeichnet, daß** das Stahlgerüst (7 - 13) aus einem innerhalb der Waschbox (18) etwa mittig angeordneten U-förmigen oder rechteckfömigen Portalrahmen (7) besteht, welcher an einem Fundamentboden (16) anbringbar ist und als Dach (5) zwei Dachhälften (5a, 5b) vorgesehen sind, welche etwa spiegelsymmetrisch an der Oberkante des Portalrahmens (7) mittels der Schwenkachse (12) befestigt sind und dort gegenläufig zueinander hochschwenkbar sind, wobei die Grundrissfläche des Portalrahmens (7) wesentlich geringer ist als die Grundrissfläche der gesamten Waschbox (18) mit den ausgeklappten Dachhälften (5a, 5b), wodurch die Waschbox (18) mit eingeklappten Dachhälften (5a, 5b) etwa ein viertel der Breite im ausgeklappten Benutzungszustand ausbildet und transportierbar ist, und der Durchmesser der Rotationsfläche des Deckenkreisels (6) etwa dreimal größer ist als die Breite der Waschbox (18) im zusammengeklappten Zustand.

2. Mobile Waschbox (18) nach Anspruch 1, **dadurch gekennzeichnet, dass** das Dach (5) über mindestens eine Stützstrebe (8) abgestützt wird, welche Stützstrebe (8) an einer von der Schwenkachse (12) beabstandeten zweiten Stützstelle (10) an der Längsstrebe (11) des Daches (5) befestigt ist.

3. Mobile Waschbox (18) nach einem der Ansprüche 1 und 2, **dadurch gekennzeichnet, dass** die Stützstrebe (8) am Rahmen (7) über eine von der Schwenkachse (12) beabstandeten ersten Stützstelle (9) befestigt ist.

4. Mobile Waschbox (18) nach einem der Ansprüche 1 bis 3, **dadurch gekennzeichnet, dass** die Stützstrebe (8) am Fundamentboden (16) befestigt wird.

5. Mobile Waschbox (18) nach dem Anspruch 2 und 3, **dadurch gekennzeichnet, dass** mindestens eine der Stützstellen (9, 10) als Linearführung und/oder teleskopisch ausgebildet ist.

6. Mobile Waschbox (18) nach dem Anspruch 2 und 3 oder 5, **dadurch gekennzeichnet, dass** die Stützstrebe (8) mindestens von einer der Stützstellen (9, 10) leicht lösbar ausgebildet ist.

7. Mobile Waschbox (18) nach einem der Ansprüche 1 bis 6, **dadurch gekennzeichnet, dass** das Verschwenken des Daches (5) über einen mechanischen Kurbelantrieb mit Getriebe oder einen elektrischen Antrieb mit Getriebe erfolgt.

8. Mobile Waschbox (18) nach einem der Ansprüche 1 bis 7, **dadurch gekennzeichnet, dass** die Stützstreben (8) beider Dachhälften (5a, 5b) mechanisch oder elektrisch synchronisiert sind.

9. Mobile Waschbox (18) nach einem der Ansprüche 1 bis 8, **dadurch gekennzeichnet, dass** pro Dach (5) auf jeder Stirnseite des Rahmens (7) zwei Stützstreben (8) anbringbar sind, welche an den seitlichen Rändern der Dächer (5) anbringbar sind.

10. Mobile Waschbox (18) nach einem der Ansprüche 1 bis 9, **dadurch gekennzeichnet, dass** jede der Dachhälften (5a, 5b) durch mindestens eine Längsstrebe (11) und mindestens zwei Querstreben (13) gebildet wird, welche sich in etwa einer Ebene befinden und von Abdeckungen (14) überdeckt sind.

11. Mobile Waschbox (18) nach einem der Ansprüche 1 bis 10, **dadurch gekennzeichnet, dass** in hochgeschwenkter Benutzungsposition eine zweite Stützstelle (10) am Dach (5) vertikal höher gelegen ist, wie ein erste Stützstelle (9) am Rahmen (7) und die Schwenkachse (12) zwischen Dach (5) und Rahmen (7), so daß Wasser auf dem Dach (5) in Richtung des Rahmens (7) abfließen kann.

12. Mobile Waschbox (18) nach Anspruch 11, **dadurch gekennzeichnet, dass** das Wasser aufgefangen und in die Kanalisation geleitet wird oder in chemisch aufbereiteter Form als Waschwasser genutzt wird.

13. Mobile Waschbox (18) nach einem der Ansprüche 1 bis 12, **dadurch gekennzeichnet, dass** auf dem Dach (5) Sonnenkollektoren und/oder Solarzellen für den Betrieb der Waschbox (18) vorgesehen sind.

14. Mobile Waschbox (18) nach einem der Ansprüche 1 bis 13, **dadurch gekennzeichnet, dass** die Waschtechnik (17), beinhaltend Wasserspeicher, Wasseraufbereitung, Heizung und Druckerzeugungseinheit, als Schrank innerhalb der Waschbox (18) oder als Technikcontainer außerhalb der Waschbox (18) angeordnet ist.

15. Mobile Waschbox (18) nach einem der Ansprüche 1 bis 14, **dadurch gekennzeichnet, dass** mehrere Waschboxen (18) aneinander mechanisch koppelbar sind.

16. Mobile Waschbox (18) nach einem der Ansprüche 1 bis 15, **dadurch gekennzeichnet, dass** mehrere Waschboxen (18) aneinander funktionell koppelbar sind und auf eine gemeinsame Waschtechnik (17) zugreifen.

## Claims

1. Mobile wash bay module (18) to accommodate at least one vehicle (19) for cleaning purposes, which module is placeable on an approximately horizontal foundation (16) and consists of a steel frame made up of steel beams (7 - 13) to which wall panels (14, 21) are attached, with vehicle entry and exit openings, two prefabricated wash bay modules (18) being transportable on one standard lorry, each module in its transport position possessing, as minimum equipment, a programme controller, lance holder, foam brush trough, all high-pressure lines, lighting unit, spray device, and foam brush, all ready mounted on the steel frame at their appointed locations, **characterized in that** the steel frame (7 - 13) consists of a U-shaped or rectangular portal frame (7) arranged approximately centrally within the wash bay module (18) and fixable to a foundation (16), and two roof halves (5a, 5b) are provided as roof (5) which are mounted approximately mirror-symmetrically at the top edges of the portal frame (7) by means of hinges (12) and can be swung there in opposite directions, the horizontal extent of the portal frame (7) being considerably lesser than that of the whole wash bay module (18) with its roof halves (5a, 5b) deployed, so that the wash bay module (18) with its roof halves (5a, 5b) folded down takes up approximately a quarter of its width when deployed for use, and is transportable; and the diameter of the plane of rotation of the overhead boom (6) is approximately three times the width of the wash bay module (18) in the collapsed condition.

2. Mobile wash bay module (18) according to Claim 1, **characterized in that** the roof (5) is propped up by at least one stay (8) which is attached to the longitudinal spar (11) of the roof (5) at a second support point (10) remote from the hinge (12).

3. Mobile wash bay module (18) according to either of Claims 1 and 2, **characterized in that** the stay (8) is attached to the frame (7) by a first support point (9) remote from the hinge (12).

4. Mobile wash bay module (18) according to any one of Claims 1 to 3, **characterized in that** the stay (8) is fixed to the foundation (16).

5. Mobile wash bay module (18) according to Claims 2 and 3, **characterized in that** at least one of the support points (9, 10) is configured as a linear guide and/or telescoping.

6. Mobile wash bay module (18) according to Claims 2 and 3 or 5, **characterized in that** the stay (8) is designed to be easily releasable from one of the support points (9, 10).

7. Mobile wash bay module (18) according to any one of Claims 1 to 6, **characterized in that** the pivoting of the roof (5) is effected by a mechanical crank drive with gearing or an electrical drive with gearing.

8. Mobile wash bay module (18) according to any one of Claims 1 to 7, **characterized in that** the stays (8) of the two roof halves (5a, 5b) are mechanically or electrically synchronized.

9. Mobile wash bay module (18) according to any one of Claims 1 to 8, **characterized in that** two stays (8) per roof (5) which are attachable to the lateral edges of the roofs (5) are attachable to each frontal face of the frame (7).

10. Mobile wash bay module (18) according to any one of Claims 1 to 9, **characterized in that** each of the roof halves (5a, 5b) is formed by at least one longitudinal spar (11) and at least two cross braces (13) which are located approximately in one plane and are covered with panels (14).

11. Mobile wash bay module (18) according to any one of Claims 1 to 10, **characterized in that** in the raised ready-for-use position a second support point (10) on the roof (15) is located vertically higher than a first support point (9) on the frame (7) and the hinge (12) between roof (5) and frame (7), so that water on the roof (5) will run off towards the frame (7).

12. Mobile wash bay module (18) according to any one of Claims 1 to 11, **characterized in that** the water is collected and led into the drainage system or, in chemically treated form, used as washing water.

13. Mobile wash bay module (18) according to any one of Claims 1 to 12, **characterized in that** solar collectors and/or solar cells for operating the wash bay module (18) are provided on the roof (5).

14. Mobile wash bay module (18) according to any one of Claims 1 to 13, **characterized in that** the wash system (17) including water storage, water treatment, heating and pressure generating unit is arranged as a cabinet inside the module (18) or as a systems container outside the module (18).

15. Mobile wash bay module (18) according to any one of Claims 1 to 14, **characterized in that** a series of wash bay modules (18) are mechanically interconnectable.

16. Mobile wash bay module (18) according to any one of Claims 1 to 15, **characterized in that** a series of wash bay modules (18) are functionally interconnectable and access a common wash system (17).

## Revendications

1. Station de lavage mobile (18) destinée à recevoir au moins un véhicule (19) à des fins de nettoyage, qui est apte à être installée sur un socle (16) à peu près horizontal et qui se compose d'une ossature métallique formée de poutres métalliques (7-13) sur lesquelles sont montées des parois (14, 21), avec une ouverture pour l'entrée et la sortie des véhicules, étant précisé que deux stations de lavage (18) préfabriquées peuvent être transportées sur un camion normal et que la station de lavage comporte déjà dans sa position de transport au moins un appareil automatique de programmation, un support de lance, un bac pour brosse en mousse, toutes les conduites haute pression, une lampe, un dispositif d'arrosage et une brosse en mousse qui sont déjà fixés à l'ossature métallique à l'endroit de fixation prévu pour eux,
**caractérisée en ce que** l'ossature métallique (7-13) se compose d'un portique (7) en U ou rectangulaire qui est disposé à peu près au centre de la station de lavage (18) et qui est apte à être installé sur un socle (16), et il est prévu comme toit (5) deux moitiés de toit (5a, 5b) qui sont fixées, à peu près en miroir, au bord supérieur du portique (7) à l'aide du pivot (12) et qui sont aptes à être soulevées en pivotant en sens inverse, la surface au sol du portique (7) étant nettement plus petite que celle de l'ensemble de la station de lavage (18) avec les moitiés de toit (5a, 5b) dépliées, moyennant quoi la station de lavage (18) avec les moitiés de toit (5a, 5b) repliées représente un quart de sa largeur en position d'utilisation dépliée et peut être transportée, et le diamètre de la surface de rotation du plafond rotatif (6) est à peu près trois fois supérieur à la largeur de la station de lavage (18) en position repliée.

2. Station de lavage mobile (18) selon la revendication 1, **caractérisée en ce que** le toit (5) est en appui grâce à au moins une contrefiche (8), laquelle est fixée au longeron (11) du toit (5) au niveau d'un second point d'appui (10) espacé du pivot (12).

3. Station de lavage mobile (18) selon l'une des revendications 1 et 2, **caractérisée en ce que** la contrefiche (8) est fixée au portique (7) par l'intermédiaire d'un premier point d'appui (9) espacé du pivot (12).

4. Station de lavage mobile (18) selon l'une des revendications 1 à 3, **caractérisée en ce que** la contrefiche (8) est fixée au socle (16).

5. Station de lavage mobile (18) selon les revendications 2 et 3, **caractérisée en ce que** l'un au moins des points d'appui (9, 10) est conçu comme un guide linéaire et/ou est télescopique.

6. Station de lavage mobile (18) selon les revendications 2 et 3 ou 5, **caractérisée en ce que** la contrefiche (8) est conçue pour pouvoir être enlevée facilement de l'un au moins des points d'appui (9, 10).

7. Station de lavage mobile (18) selon l'une des revendications 1 à 6, **caractérisée en ce que** le pivotement du toit (5) se fait grâce à une commande mécanique à manivelle avec une transmission, ou à une commande électrique avec une transmission.

8. Station de lavage mobile (18) selon l'une des revendications 1 à 7, **caractérisée en ce que** les contrefiches (8) des deux moitiés de toit (5a, 5b) sont synchronisées par voie mécanique ou électrique.

9. Station de lavage mobile (18) selon l'une des revendications 1 à 8, **caractérisée en ce qu'**on peut installer pour chaque toit (5), sur chaque côté frontal du portique (7), deux contrefiches (8) qui sont aptes à être installées sur les bords latéraux des toits (5).

10. Station de lavage mobile (18) selon l'une des revendications 1 à 9, **caractérisée en ce que** chacune des moitiés de toit (5a, 5b) est formée par au moins un longeron (11) et au moins deux traverses (13) qui se trouvent à peu près dans un même plan et qui sont couverts par des couvertures (14).

11. Station de lavage mobile (18) selon l'une des revendications 1 à 10, **caractérisée en ce que** dans la position d'utilisation relevée, un second point d'appui (10) prévu sur le toit (5) se trouve plus haut, à la verticale, qu'un premier point d'appui (9) prévu sur le portique (7) et que le pivot (12) entre le toit (5) et le portique (7), de sorte que l'eau peut couler sur le toit (5) en direction du portique (7).

12. Station de lavage mobile (18) selon la revendication 11, **caractérisée en ce que** l'eau est recueillie et est amenée dans la canalisation d'évacuation ou est utilisée comme eau de lavage, sous une forme traitée chimiquement.

13. Station de lavage mobile (18) selon l'une des revendications 1 à 12, **caractérisée en ce qu'**il est prévu sur le toit (5) des capteurs solaires et/ou des cellules solaires pour faire fonctionner la station de lavage (18).

14. Station de lavage mobile (18) selon l'une des revendications 1 à 13, **caractérisée en ce que** le matériel technique de lavage (17), qui comprend un réservoir d'eau, un dispositif de traitement de l'eau, un chauffage et une unité de production de pression, est disposé sous forme d'armoire à l'intérieur de la station de lavage (18) ou sous forme de conteneur technique à l'extérieur de la station de lavage (18).

15. Station de lavage mobile (18) selon l'une des revendications 1 à 14, **caractérisée en ce que** plusieurs stations de lavage (18) sont aptes à être couplées mécaniquement.

16. Station de lavage mobile (18) selon l'une des revendications 1 à 15, **caractérisée en ce que** plusieurs stations de lavage (18) sont aptes à être couplées de manière fonctionnelle et ont accès à un matériel technique de lavage (17) commun.
